# EUROPEAN PATENT APPLICATION

(11) **EP 4 350 434 A1**
(43) Date of publication of application: **10.04.2024**
(21) Application number: 22811701.6
(22) Date of filing: 28.05.2022
(51) Int. Cl.: G03B 17/56, G03B 30/00, H04N 5/225, B60R 11/04

(54) **CAMERA DEVICE**

(30) Priority: 28.05.2021 KR 20210069563
(71) Applicant: LG INNOTEK CO., LTD., Seoul 07796 (KR)
(72) Inventor: HWANG, Sun Min, Seoul 07796 (KR); LEE, Min Woo, Seoul 07796 (KR)
(74) Representative: DREISS Patentanwälte PartG mbB
(86) International application number: PCT/KR2022/007619
(87) International publication number: WO 2022/250510

(57) **Abstract**

A camera device comprises: a moving portion including a lens; a fixed portion coupled to the moving portion; a plate arranged between the moving portion and the fixed portion; and an adjuster which adjusts the movement of the moving portion. The adjuster comprises an elastic member, an adjusting member, and a body. The body comprises a base, a first sidewall extending from the base and coming into contact with the fixed portion, and a second sidewall extending from the base and coming into contact with the moving portion.

## Description

### [Technical Field]

The present embodiment relates to a camera device.

### [Background Art]

Recently, a subminiature camera module has been developed, and the miniature camera module is widely used in small electronic products such as smart phones, laptop computers, and game consoles.

As the spread of automobiles has become popular, subminiature cameras are widely used not only in small electronic products but also in vehicles. For example, black box cameras for vehicle protection or objective data on traffic accidents, rear surveillance cameras enabling the driver to monitor blind spots at the rear of the vehicle through a screen to ensure safety when reversing the vehicle, ambient detection cameras capable of monitoring the surroundings of the vehicle, and the like are provided.

Meanwhile, with the advancement of technology, there is a trend of applying a lane keeping assist system (LKAS), which receives video signals from the road ahead and analyzes them in real time and detects lane departure situations caused by the driver's carelessness or drowsy driving to generate an alarm by receiving the signals.

However, due to differences in vehicle size and wind glass angle for each vehicle, a separate coupler, and the like must be used for each vehicle to optimize the angle of view for the camera for the lane keeping assist system, and accordingly, there is a problem that the cost of the mold is incurring.

### [Detailed Description of the Invention]

### [Technical Subject]

The present embodiment is intended to provide a camera device that can reduce manufacturing costs and adjust the angle of view to a beam angle within a desired range.

In addition, it is intended to provide a camera device that can easily adjust the angle of view to a beam angle within a desired range even after mounting.

### [Technical Solution]

A camera device according to the present embodiment comprises: a moving portion including a lens; a fixed portion being coupled to the moving portion; a plate being disposed between the moving portion and the fixed portion; and an adjuster for adjusting the movement of the moving portion, wherein the adjuster includes an elastic member, an adjusting member, and a body, and wherein the body includes: a base; a first side wall being extended from the base and being in contact with the fixed portion; and a second side wall being extended from the base and being in contact with the moving portion.

The elastic member is formed integrally with the plate and may include a first region being extended to one side of the plate and a second region being bent from the first region.

When the gap between the base of the body and the fixed portion becomes smaller, the gap between the first region and the second region of the elastic member may become smaller.

The gap between the plate and the fixed portion may be adjusted by a gap between the first region and the second region of the elastic member.

The elastic member is disposed between the fixed portion and the moving portion, and one side of the elastic member may be in contact with the fixed portion.

The base may include a hole into which the adjusting member is inserted.

The angle formed by the base and the first side wall may be different from the angle formed by the base and the second side wall.

The angle formed by the base and an inner surface of the first side wall is a right angle, and the angle formed by the base and an inner surface of the second side wall may be an obtuse angle.

When the gap between the base of the body and the fixed portion becomes smaller, an optical axis of the lens may be tilted to one direction from a reference point.

A camera device according to another embodiment comprises: a moving portion including a lens; a fixed portion being coupled with the moving portion; a plate being disposed between the moving portion and the fixed portion; and an adjuster for adjusting the movement of the moving portion, wherein the adjuster includes an elastic member and a body, and wherein an optical axis of the lens is tilted in one direction or the other direction from a reference point when the body moves in a direction perpendicular to the optical axis of the lens.

### [Advantageous Effects]

Through the present embodiment, it is possible to provide a camera device that can adjust the angle of view to a beam angle within a desired range.

In addition, it is possible to provide a camera device that can minimize changes in angle of view due to manufacturing tolerances of the camera module or tolerances that occur during mounting on a vehicle.

In addition, it is possible to provide a camera device that can minimize changes in angle of view caused by external forces or vibration during the installation process or after installation on a vehicle.

In addition, it is possible to provide a camera device that can readjust the angle of view being changed due to external forces after mounted on a vehicle.

### [Brief Description of Drawings]

FIG. 1 is a schematic diagram of a vehicle installed with a camera device according to an embodiment of the present invention.
FIG. 2 is a perspective view illustrating the appearance of a camera device according to an embodiment of the present invention.
FIG. 3 is a perspective view illustrating FIG. 2 from another angle.
FIG. 4 is a perspective view illustrating a rear surface of a camera device according to an embodiment of the present invention.
FIG. 5 is a perspective view illustrating a rear surface of a camera device excluding a fixed portion according to an embodiment of the present invention.
FIG. 6 is an exploded perspective view of a camera device according to an embodiment of the present invention.
FIG. 7 is an exploded perspective view of a camera device illustrating FIG. 6 from a different angle.
FIG. 8 is a cross-sectional view of a camera device according to an embodiment of the present invention.
FIG. 9 is a cross-sectional view of a camera device excluding the fixed portion in FIG. 8.

### [BEST MODE]

Hereinafter, preferred embodiments of the present invention will be described in detail with reference to the accompanying drawings.

However, the technical idea of the present invention is not limited to some embodiments to be described, but may be implemented in various forms, and inside the scope of the technical idea of the present invention, one or more of the constituent elements may be selectively combined or substituted between embodiments.

In addition, the terms (including technical and scientific terms) used in the embodiments of the present invention, unless explicitly defined and described, can be interpreted as a meaning that can be generally understood by a person skilled in the art, and commonly used terms such as terms defined in the dictionary may be interpreted in consideration of the meaning of the context of the related technology.

In addition, terms used in the present specification are for describing embodiments and are not intended to limit the present invention.

In the present specification, the singular form may include the plural form unless specifically stated in the phrase, and when described as "at least one (or more than one) of A and B and C", it may include one or more of all combinations that can be combined with A, B, and C.

In addition, in describing the components of the embodiment of the present invention, terms such as first, second, A, B, (a), and (b) may be used. These terms are merely intended to distinguish the components from other components, and the terms do not limit the nature, order or sequence of the components.

And, when a component is described as being 'connected', 'coupled' or 'interconnected' to another component, the component is not only directly connected, coupled or interconnected to the other component, but may also include cases of being 'connected', 'coupled', or 'interconnected' due that another component between that other components.

In addition, when described as being formed or arranged in "on (above)" or "below (under)" of each component, "on (above)" or "below (under)" means that it includes not only the case where the two components are directly in contact with, but also the case where one or more other components are formed or arranged between the two components. In addition, when expressed as "on (above)" or "below (under)", the meaning of not only an upward direction but also a downward direction based on one component may be included.

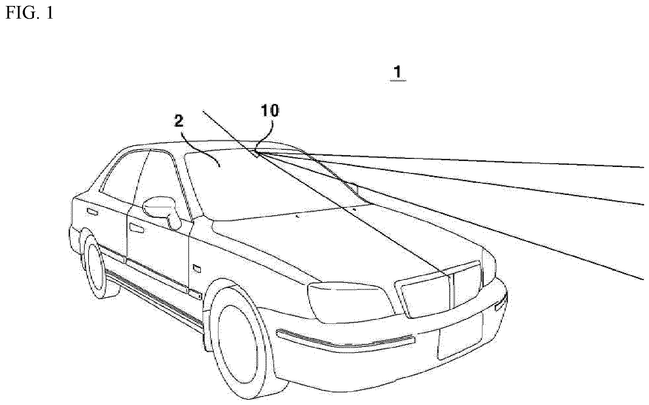

FIG. 1 is a schematic diagram of a vehicle installed with a camera device according to an embodiment of the present invention.

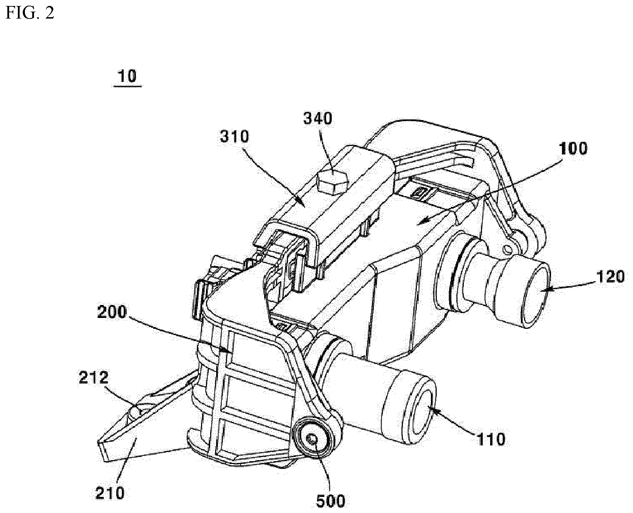

Referring to FIG. 1, the camera device **10** according to an embodiment of the present invention may be coupled to the wind glass **2** of a vehicle **1.** The wind glass **2** can be disposed in the front or rear of the vehicle 1. The wind glass **2** is made of a transparent material and allows the driver to look ahead or behind. The wind glass **2** may include a front wind glass disposed in the front of the vehicle **1** and a rear wind glass being disposed at the rear of the vehicle. The camera device **10** may be coupled to an inner surface of the wind glass **2.** In an embodiment of the present invention, the camera device **10** is described as being coupled to the front wind glass as an example, but may also be coupled to the rear wind glass. The bracket **200** (see FIG. 2) of the camera device **10** may be directly coupled to an inner side surface of the wind glass **2** by adhesive or other methods, but it is not excluded that the camera device **10** is coupled to the wind glass **2** through a separate coupler (not shown) and/or cover (not shown).

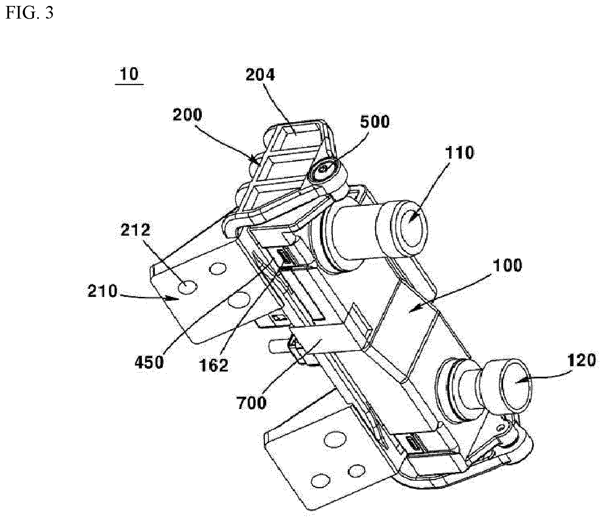

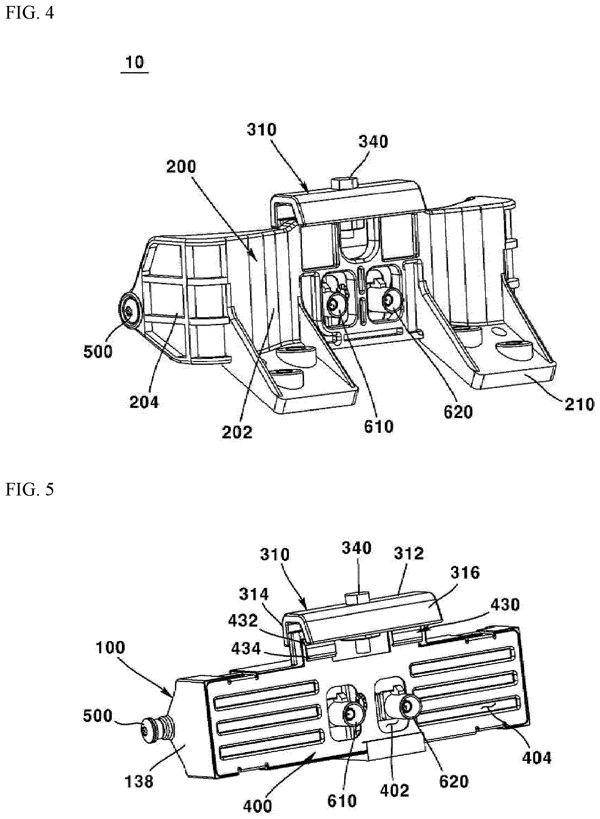

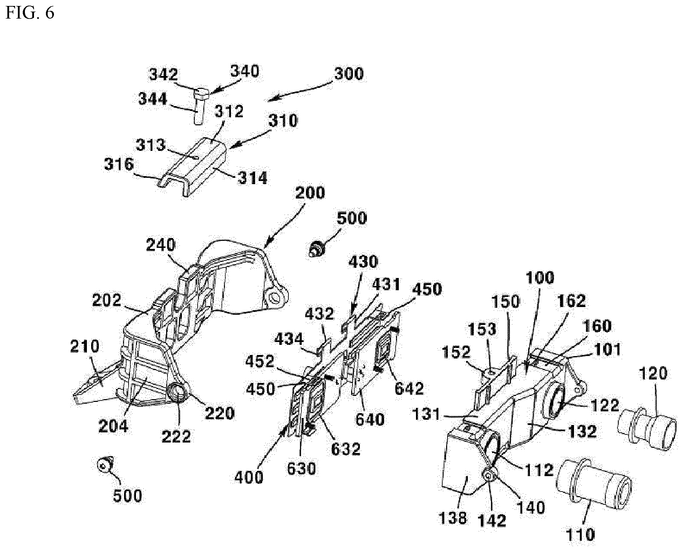

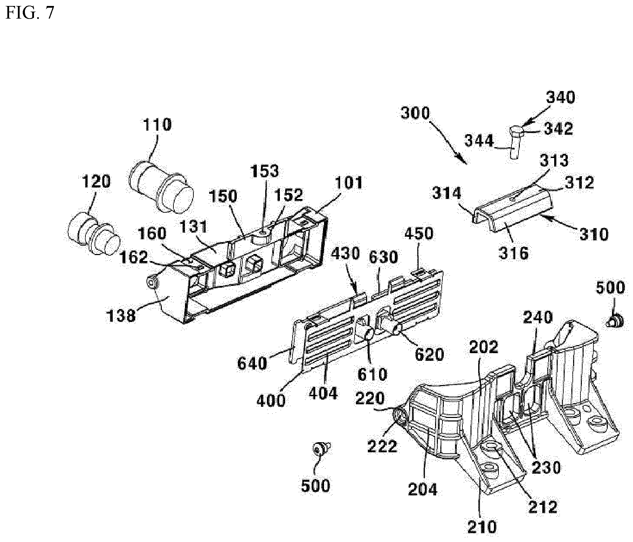

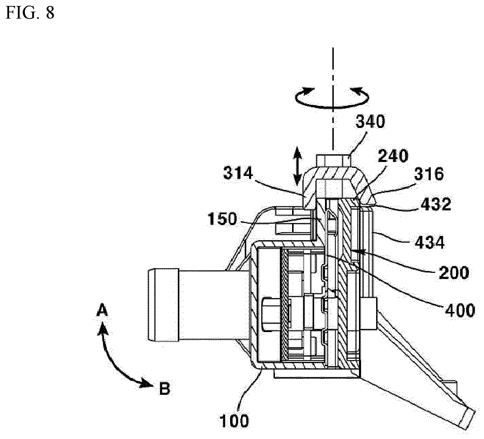

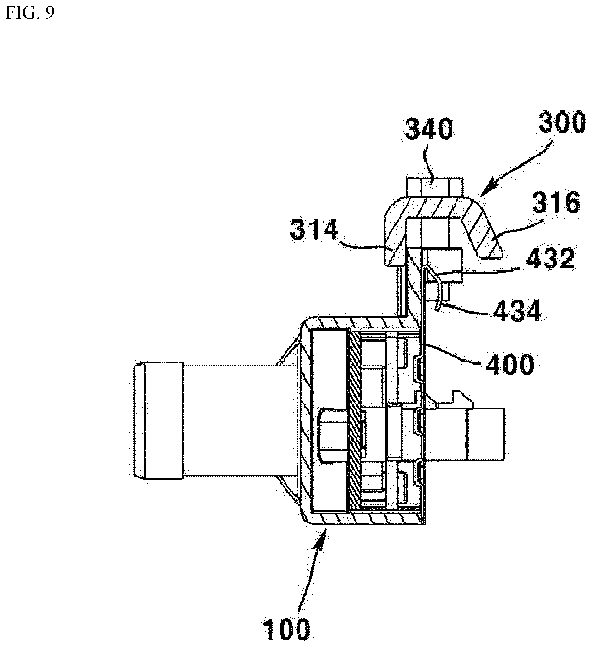

FIG. 2 is a perspective view illustrating the appearance of a camera device according to an embodiment of the present invention; FIG. 3 is a perspective view illustrating FIG. 2 from another angle; FIG. 4 is a perspective view illustrating a rear surface of a camera device according to an embodiment of the present invention; FIG. 5 is a perspective view illustrating a rear surface of a camera device excluding a fixed portion according to an embodiment of the present invention; FIG. 6 is an exploded perspective view of a camera device according to an embodiment of the present invention; FIG. 7 is an exploded perspective view of a camera device illustrating FIG. 6 from a different angle; FIG. 8 is a cross-sectional view of a camera device according to an embodiment of the present invention; and FIG. 9 is a cross-sectional view of a camera device excluding the fixed portion in FIG. 8.

Referring to FIGS. 2 to 9, a camera device **10** according to an embodiment of the present invention may include a moving portion **100,** a fixed portion **200,** an adjuster **300,** and a plate **400,** but it may be implemented excluding some of these components, and additional components are not excluded.

The camera device **10** may be installed on the wind glass **2** of the vehicle 1. The camera device **10** can adjust the photographing direction of the moving portion **100.** Through this, the angle of view can be adjusted within the range of the beam angle desired by a user by compensating for manufacturing tolerances of the moving portion **100** or mounting tolerances on the vehicle **1.**

The camera device **10** may include the moving portion **100.** The moving portion **100** may also be called a housing **100** in that it forms the outer shape of the camera device **10.** The moving portion **100** may include at least one or more lenses **110** or **120.** In the present embodiment, the camera device **10** is described as an example of a dual camera, but it is not limited to this and can be modified in various ways, such as a triple camera.

The lenses **110** and **120** include a first lens **110** and a second lens **120,** and may be disposed on a front surface of the moving portion **100.** Mounting portions **112** and **122** to which the first lens **110** and the second lens **120** are coupled may be disposed on a front surface of a housing **101** that forms the external shape of the moving portion **100.** The mounting portions **112** and **122** have an opening shape and may include a first mounting portion **112** to which the first lens **110** is coupled and a second mounting portion **122** to which the second lens **120** is coupled. The front surface of the housing **101** has a plurality of regions being disposed to be stepped from each other, and the first mounting portion **112** and the second mounting portion **122** may be disposed in each of the plurality of regions.

Meanwhile, in the present embodiment, the lenses **110** and **120** are examples of the lenses themselves, but this is not limited. The lenses **110** and **120** may be lens barrels, and at least one or more lenses may be disposed inside the lens barrel.

The housing **101** may include: a front surface portion **132** on which the mounting portions **112** and **122** are formed; an upper surface portion **131** forming an upper surface; and a side surface portion **138** being disposed on both sides of the front surface portion **132** and forming a side surface. The front end of the side surface portion **138** may be formed to be protruded forward from the front surface portion **132,** and a first coupling portion **140** for coupling to the fixed portion **200** may be disposed at a front end of the side surface portion **138.** The first coupling portion **140** includes a first coupling hole **142** and can be hinge-coupled to the fixed portion **200.** The moving portion **100** may be rotated about the first coupling hole **142** as a rotation center. Accordingly, the angle of view of the camera device **10** can be adjusted.

A space in which at least one electronic component is disposed may be formed at a rear surface of the housing **101.** For example, on a rear surface of the housing 101, a first printed circuit board **630** having a first image sensor **632** being disposed to face the first lens **110** in an optical axis direction, and a second printed circuit board **640** being disposed to face the lens **120** in an optical axis direction may be disposed. Here, it is exemplified that the first image sensor **632** and the second image sensor **642** are respectively disposed on each of the first printed circuit board **630** and the second printed circuit board **640,** but of course, it can be disposed on a circuit board.

A first guide **150** being protruded more upward than other regions may be disposed on an upper surface of the housing **101.** The first guide **150** may be disposed at the center of the upper surface portion **131.** The first guide **150** has a plate shape and can be coupled with the body **310,** which will be described later. At a rear surface of the first guide **150,** a second guide **152** is disposed being protruded more rearward than other regions, and a hole **153** into which an adjusting member **340,** which will be described later, is coupled may be formed on an upper surface of the second guide **152.**

A first coupling groove **160** for coupling with the plate **400** may be respectively disposed on an upper surface and a lower surface of the housing **101.** Two each of the first coupling grooves **160** may be disposed on the upper surface portion **131** of the housing **101,** and two each thereof may be disposed on a lower surface of the housing **101.** For example, the two of the first coupling grooves **160** being disposed in the upper surface portion **131** may be disposed to be spaced apart from each other on both sides of the first guide **150.**

The first coupling groove **160** has a shape being recessed more downward than other regions of an upper surface of the housing **101,** and a third coupling portion **450** of the plate **400,** which will be described later, may be coupled thereto. On a bottom surface of the first coupling groove **160,** a protrusion **162** being protruded from the bottom surface may be formed. A portion of an outer surface of the protrusion **162** may be an inclined surface.

The camera device **10** may include the fixed portion **200.** The fixed portion **200** may also be called a bracket **200** in that it fixes the camera device **10** to an installation region.

The fixed portion **200** may be coupled with the moving portion **100.** The fixed portion **200** may be coupled to a rear surface of the moving portion **100.** The moving portion **100** may be tiltably coupled against the fixed portion **200.**

The fixed portion **200** may include: a rear surface portion **202** being coupled to a rear surface of the moving portion **100;** and a plurality of side surface portions **204** being bent and extended forward from both ends of the rear surface portion **202** and forming a side surface. A second coupling portion **220** may be disposed at an end portion of the side surface portion **204** being extending forward. The second coupling portion **220** may be disposed to face the first coupling portion **140.** The second coupling portion **220** may include a second coupling hole **222.** The second coupling hole **222** may be disposed to face the first coupling hole **142.**

The camera device **10** is coupled to the first coupling hole **142** and the second coupling hole **222,** and may include a coupling shaft 500 that forms the center of rotation of the moving portion **100.** The coupling shaft **500** may be fitted on an outside of the second coupling portion **220** so that at least a portion thereof penetrates the second coupling hole **222** and the first coupling hole **142.** The moving portion **100** may rotate (tilt) clockwise or counterclockwise about the coupling shaft **500** through an adjuster **300,** which will be described later. The coupling shaft **500** may include a screw.

A fixing plate **210** being extended rearward may be disposed on a rear surface of the fixed portion **200.** The fixing plate **210** may have a shape being extended outward from the rear end of rear surface of the fixed portion **200.** The fixing plate **210** may include at least one or more of screw holes **212.** Accordingly, a screw is screw-coupled into the screw hole **212,** and the camera device **10** can be fixed to an installation region.

A connector hole **230** penetrating from a front surface to a rear surface may be disposed on the rear surface portion **202** of the fixed portion **200.** The connector hole **270** is for connectors **610** and **620** to penetrate therethrough, one end of the connectors **610** and **620** is coupled to the printed circuit boards **630** and **640,** and the other end penetrates the connector hole **230,** so that it may be disposed to be protruded more rearward than the rear surface of the fixed portion **200.** The connector hole **230** may be provided in plural numbers corresponding to the number of connectors **610** and **620.**

The connector hole **230** may be a long hole whose lengthwise direction is formed in an up and down direction. Accordingly, the connector may move within the connector hole **230** when the moving portion **100** moves.

A third guide **240** being protruded more upward than other regions may be disposed on an upper surface of the fixed portion **200.** The third guide **240** may be disposed to face the first guide **150** in an optical axis direction. A groove may be formed in the center of the third guide **240** to accommodate at least a portion of the second guide **152.**

The camera device **10** may include a plate **400.** The plate **400** may be disposed between the moving portion **100** and the fixed portion **200.** The plate **400** may be coupled to a rear surface of the moving portion **100.** The plate **400** may be made of metal. The plate **400** may be coupled to cover the rear surface of the space inside the moving portion **100.** Accordingly, the printed circuit boards **630** and **640** may be disposed between the plate **400** and a space inside the moving portion **100.**

The plate **400** may include a penetrating hole **402** through which the connectors **610** and **620** penetrates. The penetrating hole **402** may be formed to penetrate from a front surface to a rear surface of the plate **400.**

A concave portion **404** may be formed on a rear surface of the plate **400** in a shape that is recessed more forward than other regions. The concave portion **404** may have a groove shape. The concave portion **404** may be provided in plurality and disposed to be spaced apart from each other. The concave portion **404** may be a long groove having a predetermined length. The lengthwise direction of the concave portion **404** may be defined as a left and right direction connecting both sides of the plate **400.** The rigidity of the plate **400** can be reinforced through the concave portion **404.**

A protruded portion being protruded forward may be disposed on a front surface of the plate **400** corresponding to a region where the concave portion **404** is formed.

The plate **400** may include a third coupling portion **450.** The third coupling portion **450** may have a shape in which a portion of an edge of the plate **400** is bent forward and extended. The third coupling portion **450** may be coupled to the moving portion **100.** The third coupling portion **450** may be coupled to the first coupling groove **160.** The third coupling portion **450** may be provided in plural numbers corresponding to the number of first coupling grooves **160.** For example, two each of the third coupling portions **450** are disposed at an upper end of the plate **400** to be spaced apart from each other, and two each of the third coupling portions **450** may be disposed at a lower end to be spaced apart from each other.

The third coupling portion **450** includes a third coupling hole **452,** and the third coupling hole **452** may be coupled to the protrusion **162.** In other words, the plate **400** and the moving portion **100** may be hook-coupled through the third coupling hole **452** and the protrusion **162.**

The camera device **10** may include an adjuster **300.** The adjuster **300** is used for adjusting the angle of view of the camera device **10** and can move the moving portion **100.**

The adjuster **300** may include an elastic member **430,** an adjusting member **340,** and a body **310.**

The elastic member **430** may be a component of the plate **400.** The elastic member **430** may be formed as one body with the plate **400.** The elastic member **430** may include a first region **431** being extended upward from an upper end of the plate **400,** and second regions **432** and **434** being bent downward from an upper end of the first region **431.** In the present embodiment, the elastic member **430** is shown to be formed integrally with the plate **400,** but it may be a separate component.

The elastic member **430** may be elastically deformed in a direction perpendicular to the direction of movement of the body **310.** The first region **431** and the second regions **432** and **434** may become closer to or move away from each other as the body **310** moves. More specifically, when the gap between the base **312** of a body **310,** which will be described later, and the fixed portion **200** becomes smaller, the gap between the first region **431** and the second regions **432** and **434** becomes smaller. In addition, when the gap between the base **312** of the body **310** and the fixed portion **200** becomes distant, the gap between the first region **431** and the second regions **432** and **434** may become distant.

In addition, the gap between the plate **400** and the fixed portion **200** can be adjusted by the gap between the first region **431** and the second regions **432** and **434** of the elastic member **430.**

The elastic member **430** may be disposed between a rear surface of the first guide **150** and the rear surface portion **202** of the fixed portion **200,** that is, a front surface of the third guide **240.**

The second regions **432** and **434** may have a region bent at least once or more. The second regions **432** and **434** may include a second-first region **432** and a second-second region **434,** which are partitioned in an up and down direction with respect to the bent region. The bent region may have a shape being protruded more rearward than other regions.

The body **310** may be coupled to an upper portion of the moving portion **100** and the fixed portion **200.** At least a portion of the body **310** may be in contact with the front surface of the first guide **150,** and another portion may be in contact with the rear surface of the fixed portion **200.**

The body **310** may include: a base **312;** a first sidewall **316** being extending from the base **312** and in contact with the fixed portion **200;** a second sidewall **314** being extended from the base **312** and in contact with the moving portion **100.** The first sidewall **316** is extended from the rear of the base **312,** and the second sidewall **314** may be extended from the front of the base **312.** The first sidewall **316** and the second sidewall **314** may have a shape being protruded downward from the front and rear surfaces of the base **312.**

The angle formed by the base **312** and the first side wall **316** may be different from the angle formed by the base **312** and the second side wall **314.** For example, the first side wall **316** may be formed to be inclined so that the distance to a rear surface of the fixed portion **200** increases as it moves downward. At this time, the angle formed by the first side wall **316** and the base **312** may be an obtuse angle. The second sidewall **314** may be disposed perpendicular to the base **312.**

The moving direction of the body **310** may not be parallel to an optical axis of the lenses **110** and **120.**

A hole **313** through which the adjusting member **340** penetrates from an upper surface to a lower surface to be coupled thereto may be formed in the base **312.** A screw thread or screw groove may be formed on an inner circumferential surface of the hole **313,** and the adjusting member **340** can be screw-coupled accordingly.

The base **312** may be disposed to be overlapped with the second guide **152** in an up and down direction. The hole **313** in the base **312** may be disposed to face the hole **153** of the second guide **152** in up and down direction.

The adjusting member **340** may penetrate through the hole **313** of the base **312** and screw-coupled to the hole **153** of the second guide **152.** The adjusting member **340** may also be called a screw **340.** The adjusting member **340** may include a head portion **342** and a fastening portion **344** being protruded downward from a lower surface of the head portion **342** and coupled to the holes **313** and **153.** The camera device **10** may include a control unit (not shown) that controls the rotation of the adjusting member **340.** As the adjusting member **340** rotates, the moving portion **100** may be tilted against the fixed portion **200.**

The control unit is for controlling the rotation of the adjusting member **340,** and can move the body **310** in an up and down direction through the rotation of the adjusting member **340.** The adjusting member **340** may be connected to a separate driving unit such as a step motor, and the control unit may control the rotation of the adjusting member **340** through control of the step motor.

Of course, the adjusting member **340** can be manually rotated by a user.

According to the above structure, when the gap between the base **312** of the body **310** and the fixed portion **200** becomes smaller, the optical axes of the lenses **110** and **120** may be tilted in one direction from the reference point. In addition, the optical axes of the lenses **110** and **120** may be tilted from the reference point to the other direction when the gap between the base **312** of the body **310** and the fixed portion **200** increases.

Here, the reference point may be a region where the optical axes of the lenses **110** and **120** are initially set during the assembly process of the camera device **10.**

Accordingly, the optical axis of the lens **110** or **120** may be tilted in one direction or the other direction from the reference point when the body **310** moves in a direction perpendicular to the optical axis of the lens **110** or **120.** With respect to the reference point, the lenses **110** and **120** may have a rotation angle of 20 degrees in one direction or the other direction. This takes into account the gap between the fixed portion **200** and the plate **400,** and this is in consideration of the deformation of the components inside the camera device **10** when the moving portion rotates beyond the set range and that the space inside the camera device **10** is excessively open.

With reference to FIG. 8, the body **310** moves downward when the control member **340** is rotated in one direction by the control unit, and the moving portion **100** including the lenses **110** and **120** may be moved in a first direction **A** by the contact between the first side wall **316** and the fixed portion **200** and the contact between the second side wall **314** and the moving portion **100.** This can be understood as the optical axes of the lenses **110** and **120** are tilted upward when the body **310** moves downward. In addition, when the body **310** moves downward, the gap between the upper side of the plate **400** and the upper side of the fixed portion **200** may become narrow, and the gap between the lower side of the plate **400** and the lower side of the fixed portion **200** may become widened.

In addition, when the adjusting member **340** is rotated in the other direction by the control unit, the body **310** moves upward, and the moving portion **100** including the lenses **110** and **120** may be moved in a second direction **B** due to a change in the contact region between the fixed portion **200** and the first sidewall **316.** This can be understood as when the body **310** moves upward, the optical axes of the lenses **110** and **120** are tilted downward. And, when the body **310** moves upward, the gap between the upper side of the plate **400** and the upper side of the fixed portion **200** may be widened, and the gap between the lower side of the plate **400** and the lower side of the fixed portion **200** may be narrowed.

Meanwhile, the camera device **10** may include a clip **700** that restricts the movement of the moving portion **100,** and the clip **700** may be coupled to a lower surface of the camera device **10.** As an example, a portion of the clip **700** may be coupled to a lower surface of the moving portion **100,** and the other portion may be coupled to a lower surface of the fixed portion **200.** The clip **700** can prevent the moving portion **100** from being excessively tilted in a first direction **A.**

According to the above structure, it is possible to provide a camera device that can adjust the angle of view to a beam angle within a desired range.

In addition, it is possible to provide a camera device that can minimize changes in angle of view due to manufacturing tolerances of the camera module or tolerances that occur when mounted on a vehicle.

In addition, it is possible to provide a camera device that can minimize changes in angle of view caused by external forces or vibration during mounting process or after mounting on a vehicle.

In the above description, it is described that all the components constituting the embodiments of the present invention are combined or operated in one, but the present invention is not necessarily limited to these embodiments. In other words, within the scope of the present invention, all of the components may be selectively operated in combination with one or more. In addition, the terms "comprise", "include" or "having" described above mean that the corresponding component may be inherent unless specifically stated otherwise, and thus it should be construed that it does not exclude other components, but further include other components instead. All terms, including technical and scientific terms, have the same meaning as commonly understood by one of ordinary skill in the art unless otherwise defined. Terms used generally, such as terms defined in a dictionary, should be interpreted to coincide with the contextual meaning of the related art, and shall not be interpreted in an ideal or excessively formal sense unless explicitly defined in the present invention.

The above description is merely illustrative of the technical idea of the present invention, and those skilled in the art to which the present invention pertains may make various modifications and changes without departing from the essential characteristics of the present invention. Therefore, the embodiments disclosed in the present invention are not intended to limit the technical idea of the present invention but to describe the present invention, and the scope of the technical idea of the present invention is not limited by these embodiments. The protection scope of the present invention should be interpreted by the following claims, and all technical ideas within the equivalent scope should be interpreted as being included in the scope of the present invention.

## Claims

1. A camera device comprising:
a moving portion including a lens;
a fixed portion being coupled to the moving portion;
a plate being disposed between the moving portion and the fixed portion; and
an adjuster for adjusting the movement of the moving portion,
wherein the adjuster includes an adjusting member and a body, and
wherein the body includes a base, a first sidewall being extended from the base and being in contact with the fixed portion, and a second side wall being extended from the base and being in contact with the moving portion.

2. The camera device according to claim 1,
wherein the elastic member is formed integrally with the plate and includes a first region being extended to one side of the plate and a second region being bent from the first region.

3. The camera device according to claim 2,
wherein when the gap between the base of the body and the fixed portion becomes smaller, the gap between the first region and the second region of the elastic member becomes smaller.

4. The camera device according to claim 2,
wherein the gap between the plate and the fixed portion is adjusted by a gap between the first region and the second region of the elastic member.

5. The camera device according to claim 1,
wherein the elastic member is disposed between the fixed portion and the moving portion, and one side of the elastic member is in contact with the fixed portion.

6. The camera device according to claim 1,
wherein the base includes a hole into which the adjusting member is inserted.

7. The camera device according to claim 1,
wherein the angle formed by the base and the first side wall are different from the angle formed by the base and the second side wall.

8. The camera device according to claim 7,
wherein the angle formed by the base and an inner surface of the first side wall is a right angle, and the angle formed by the base and an inner surface of the second side wall is an obtuse angle.

9. The camera device according to claim 1,
wherein when the gap between the base of the body and the fixed portion becomes smaller, an optical axis of the lens is tilted to one direction from a reference point.

10. A camera device comprising:
a moving portion including a lens;
a fixed portion being coupled with the moving portion;
a plate being disposed between the moving portion and the fixed portion; and
an adjuster for adjusting the movement of the moving portion,
wherein the adjuster includes an elastic member and a body, and
wherein an optical axis of the lens is tilted in one direction or the other direction from a reference point when the body moves in a direction perpendicular to the optical axis of the lens.
